# EUROPEAN PATENT APPLICATION

(11) **EP 4 703 485 A1**
(43) Date of publication of application: **04.03.2026**
(21) Application number: 24796524.7
(22) Date of filing: 16.02.2024
(51) Int. Cl.: C22C 1/08, B22F 1/00, B22F 1/05, B22F 3/11, C22C 14/00, C25B 13/02

(54) **TITANIUM POROUS BODY AND TITANIUM POROUS BODY MANUFACTURING METHOD**

(30) Priority: 27.04.2023 JP 2023073754
(71) Applicant: Toho Titanium CO., LTD., Chigasaki-shi Kanagawa 253-8510 (JP)
(72) Inventor: INOUE,Yosuke, Chigasaki-shi, Kanagawa 253-8510 (JP); TSUMAGARI,Shogo, Chigasaki-shi, Kanagawa 253-8510 (JP); SATO,Takanori, Chigasaki-shi, Kanagawa 253-8510 (JP)
(74) Representative: Mewburn Ellis LLP
(86) International application number: PCT/JP2024/005628
(87) International publication number: WO 2024/224765

(57) **Abstract**

A titanium porous body according to this invention is in a form of a sheet, and has a thickness t of 0.50 mm or less, a projected area of a surface on a plane of 28,000 mm² or more, an irreversible deformation amount after being pressurized at 100 MPa of 1.0% or less, and an air permeability P (µm/Pa·S) satisfying a relationship P ≥ I between the permeability P and an index value I, and the index value I is represented by I = 1.6 × (1/t)^{i.3}.

## Description

### [Technical Field]

The present invention relates to a titanium porous body in a form of a sheet, and a method for producing the titanium porous body.

### [Background Art]

A titanium porous body produced by sintering titanium powder or the like has gas and liquid permeability due to its pores, and electrical conductivity, as well as high corrosion resistance due to formation of a passive film on its surface.

The use of such a titanium porous body as a porous transport layer (PTL) and the like in an environment where corrosion may occur in a polymer electrolyte membrane: PEM type water electrolytic device, is under consideration. In particular, hydrogen produced by water electrolysis devices such as the PEM type using electricity derived from renewable energy sources is referred to as green hydrogen, which is highly anticipated in recent years where the movement toward the realization of a decarbonized society is being accelerated.

In this regard, Patent Literature 1 discloses: "A method for producing a porous titanium sintered body, comprising: a slurry preparing step of mixing at least one of titanium powder and titanium hydride powder with an organic binder, a foaming agent, a plasticizer, water, and optionally a surfactant to prepare a slurry; a forming step of applying the slurry onto a first support to form a formed body; a foaming step of foaming the formed body by heating and drying to form a foamed formed body; a degreasing step of heating and degreasing the foamed formed body separated from the first support and placed on a second support; a first sintering step of heating the degreased foamed formed body in a non-oxidizing atmosphere to prepare a primary sintered body having electrical conductivity; and a second sintering step of sintering the primary sintered body in a non-oxidizing atmosphere at a temperature higher than that of the first sintering step to prepare a porous titanium sintered body".

### [Citation List]

### [Patent Literature]

[PTL 1] Japanese Patent Application Publication No. 2009-102701 A

### [Summary of Invention]

### [Technical Problem]

By the way, in the above water electrolysis device, from the viewpoint of downsizing the equipment, a titanium porous body in the form of a thin sheet with excellent compression resistance may be required. There is a concern that a titanium porous body having poor compression resistance may not be able to maintain the required thickness or shape for the compressive force that may act when it is incorporated into a device such as a PEM type water electrolysis device, resulting in decreased gas permeability and liquid permeability.

To obtain porous titanium with high compression resistance, it is considered that the sintering temperature is increased during its production. However, if the heating temperature during sintering is increased to a certain degree, especially when producing titanium porous body having a certain large surface area (projected area onto a plane), wrinkles generated on the surface of the titanium porous body after sintering and the like can easily cause defective products, resulting in a lower production yield.

Patent Literature 1 does not discuss anything about increasing the compression resistance of porous titanium bodies.

An object of this invention is to provide a titanium porous body having somewhat large surface area, improved compression resistance, and required gas or liquid permeability, as well as a method for producing such a titanium porous body with a relatively high yield.

### [Solution to Problem]

As results of intensive studies, the inventors have found that, when drying of a paste containing titanium powder, debinding of the resulting formed body, and sintering of the titanium powder are performed in sequence, the formed body is debinded by inverting the front and back surfaces after drying. This allows an organic binder accumulated on the lower side of the placing surface in the paste during drying to be located on the upper side of the formed body after drying due to the front-to-back inversion and is well volatilized during debinding. As a result, even if the formed body is heated at a relatively high temperature during sintering, the generation of surface wrinkles and other defects in the sintered titanium porous body can be suppressed, resulting in an improved yield. The titanium porous body thus produced has improved compression resistance and relatively high gas or liquid permeability. The accumulation of the organic binder on the lower side of the placing surface during drying would be due to the fact that the organic solvent on the upper side, opposite to the placing surface, is preferentially volatilized during drying, and as drying proceeds, the organic binder on the upper side is dissolved and accumulated in the organic solvent on the lower side, which is difficult to be volatilized. When the debinding is carried out without inverting the front and back surfaces of the formed body, the organic binder on the lower side will remain, which will prevent the titanium powder from coming into close to or contact with it during sintering.

A titanium porous body according to this invention is in a form of a sheet, and has a thickness t of 0.50 mm or less, a projected area of a surface onto a plane of 28,000 mm² or more, an irreversible deformation amount after being pressurized at 100 MPa of 1.0% or less, and an air permeability P (µm/Pa·S) satisfying a relationship P ≥ I between the air permeability P and an index value I of P ≥ I , the index value I being represented by I = 1.6 × (1/t)^{1.3}.

It is preferable that the titanium porous body as described above has a titanium content of 97% by mass or more and an oxygen content of 0.9% by mass or more and 2.0% by mass or less.

In the titanium porous body described above, the surface projected area is preferably 600,000 mm² or less.

In the titanium porous body as described above, the thickness t is preferably 0.04 mm or more.

The titanium porous body preferably has a ten-point average roughness Rz of at least one surface of 9 µm or less.

The method for producing a titanium porous body according to the present invention is a method for producing a titanium porous body in a form of a sheet, the method comprising: a drying step of drying a paste containing titanium powder, an organic binder and an organic solvent but not containing water or a foaming agent on a placing surface to obtain a formed body in a form of a sheet; a debinding step of heating the formed body on the placing surface in a direction where front and back surfaces of the formed body are inverted relative to the direction on the placing surface in the drying step to volatilize the organic binder in the formed body; and a sintering step of heating the formed body after the debinding step to sinter the titanium powder in the formed body, wherein the titanium porous body has a thickness of 0.50 mm or less and a surface projected area onto a plane of 28,000 mm² or more.

In the method described above, it is preferable to use as the titanium powder a pulverized powder having an average particle size D50 of 10 µm or more and 45 µm or less. It is also preferable to use as the titanium powder a titanium powder having an average particle size D50 of 10 µm or more and 20 µm or less.

In the drying step, the paste is preferably heated in an atmosphere containing oxygen at a temperature of 80°C or higher and 150°C or lower.

In the debinding step, the formed body is preferably heated in an atmosphere containing oxygen at a temperature of 320°C or higher and 450°C or lower.

In the sintering step, the formed body is preferably heated in a reduced pressure or inert gas atmosphere.

In the sintering step, the formed body is preferably heated at a temperature of 750°C to 1000°C. In the sintering step, the formed body is preferably heated at a temperature of 775°C to 950°C.

### [Advantageous Effects of Invention]

The titanium porous body according to this invention has somewhat large surface area, and improved compression resistance, and can exert required gas or liquid permeability. According to the method for producing a titanium porous body according to this invention, such a titanium porous body can be produced with a relatively high yield.

### [Description of Embodiments]

Embodiments of the present invention will be described in detail below.

The titanium porous body according to an embodiment of this invention is in a form of a sheet, and has a thickness t of 0.50 mm or less and a projected area (apparent area in plane view) of 28,000 mm² or more when the surface is projected onto a plane. This titanium porous body has improved compression resistance and can exhibit the required gas permeability or liquid permeability because an irreversible deformation amount after being pressurized at 100 MPa is less than 1.0% and the air permeability P (µm/Pa·S) satisfies the relationship: P ≥ I between the air permeability P and the index value I. The above index value I depends on the thickness t (mm) and is represented by I = 1.6 x (1/t)^{1.3}.

Such a titanium porous body can be produced by performing, for example, a drying step for a paste containing titanium powder, a debinding step for the resulting formed body and a sintering step for the titanium powder in this order. In the drying step, the paste is heated and dried on a placing surface to obtain a formed body in a form of a sheet. In the production method according to an embodiment, in the subsequent debinding step, the formed body described above is heated on the placing surface in the orientation where front and back surfaces of the formed body are inverted relative to the orientation on the placing surface in the drying step.

The inventors have conducted various studies and have obtained the inferences described below. That is, when the paste is heated on the placing surface during the drying step, as described above, most of the organic binder in the paste migrates to the lower side of the placing surface, and a large amount of organic binder may exist on the lower side of the formed body obtained in the drying step. If the debinding step is performed in that orientation, the organic binder on the lower side of the formed body may remain without being fully removed. When the formed body is then heated in the sintering step, the titanium porous body is likely to become defective due to the formation of wrinkles or ridges on its surface caused by the volatilization of the organic binder in the sintering step. This becomes particularly apparent when producing a large titanium porous body having a surface projected area of 28,000 mm² or more onto a plane. In this case, during sintering, the organic binder remaining on the lower side prevents the titanium powders from bonding with each other, and relatively large holes (pores) tend to be formed there, so that the compression resistance of the titanium porous body cannot be increased so much.

In contrast, as described above, by inverting the front and back surfaces of the formed body after the drying step, the organic binder located on the lower side of the formed body after the drying step is located on the upper side (i.e., the opposite side of the placing surface), so that it is easily volatilized in the subsequent debinding step. This reduces the generation of defective products in the sintering step and improves the production yield. Since the organic binder is well volatilized in the debinding step, the formation of relatively large holes (pores) caused by residual organic binder is suppressed in the sintering step. In addition, since the organic binder is well separated from the formed body to be used for the sintering step and the titanium powder particles are properly arranged in the formed body and sintered, the required gas permeability or liquid permeability can be ensured. Therefore, the titanium porous body has improved compression resistance and can exhibit the required gas permeability or liquid permeability even when it is compressed.

### (Titanium Porous Body)

The titanium porous body is made of titanium. If it is made of titanium, a titanium porous body having high electrical conductivity can be obtained with a certain relative density. The titanium content of the titanium porous body is preferably 97% by mass or more, and more preferably 98% by mass or more. The upper limit of the titanium content may be, for example, 99.8% by mass or less, or 99% by mass or less or less, although not particularly limited thereto. The titanium content refers to the purity of titanium, taking into account impurities including not only the metallic components but also gas components such as oxygen. Therefore, the titanium content is determined by subtracting the total content of impurity components including metallic components and gas components, from 100% by mass.

The titanium porous body may contain Fe as an impurity, and an Fe content may be 0.25% by mass or less, for example. The titanium porous body may also contain Ni, Cr, Al, Cu, Zn, and Sn as unavoidable impurities resulting from the production process, for example. It is suitable that the content of each of Ni, Cr, Al, Cu, Zn, and Sn is less than 0.10% by mass, and the total content thereof is preferably less than 0.30% by mass.

The titanium porous body may, for example, have an oxygen content of 0.9% by mass or more and 2.0% by mass or less, although not limited thereto. If the drying and/or debinding steps are performed in an atmosphere containing oxygen, as in the production method described below, the oxygen content of the titanium porous body may increase to some extent. The oxygen content can be measured by an inert gas fusion-infrared absorption method.

The titanium porous body may have a purity corresponding to pure titanium types 1-4 in JIS H 4600 (2012), typically type 1 or 2, except for the oxygen content.

The thickness t of the titanium porous body in the form of the sheet is 0.50 mm or less, or it may be 0.04 mm or more. For example, the titanium porous body having such a thickness t may be required for the porous transport layer of a PEM type water electrolysis device. If the thickness t is too large, the PEM type water electrolysis device may become larger. The thickness t of the titanium porous body may be, for example, 0.40 mm or less, or 0.35 mm or less, or 0.30 mm or less, or 0.25 mm or less, or 0.20 mm or less, while it may be 0.04 mm or more, or 0.08 mm or more.

The thickness t is measured at five points in total: four at the periphery and one at the center of the titanium porous body, using a digital thickness gage having a flat measuring element of 10 mm in diameter and a measurement accuracy of 0.001 to 0.01 mm, such as Mitutoyo digital thickness gage (Model No. 547-321), for example, and an average value of these measurements is determined to be the thickness t. If the titanium porous body in the form of the sheet is rectangular in the plane view, the above four points of the periphery should be the four points of the four corners.

The surface projected area of the titanium porous body in the form of the sheet in the plane view is 28,000 mm² or more, and may be, for example, 600,000 mm² or less. The titanium porous body having a somewhat large surface projected area can be cut and used as needed, making them suitable for mass production. On the other hand, attempts to produce titanium porous bodies having a larger surface projected area tend to result in more defective products, but according to the embodiment described here, it is possible to suppress the generation of such defective products. The projected area as used herein means the area of the surface of the titanium porous body projected onto a plane.

It should be noted that the term "form of a sheet" for the titanium porous body means a plate shape or a foil shape having a smaller thickness with respect to planar view dimensions. The planar view shape of the titanium porous body may be any shape, but it may be square with an aspect ratio of 1:1 to 1:3, rectangular, rhombic, or other polygonal. The polygonal shaped titanium porous body may be chamfered at its corners.

The titanium porous body is composed of titanium powders bonded together and has a three-dimensional network structure with pores formed between the titanium powders bonded together. As an example, the titanium porous body may have a sponge titanium-shaped three-dimensional network structure backbone. The titanium porous body produced with titanium fibers tends to have a non-woven three-dimensional network structure. In many cases, the interior of the framework composed of titanium powders bonded to each other in the titanium porous body is solid rather than hollow.

When the titanium porous body is subjected to the following operation twice: compressing it by applying a pressure of 100 MPa in the thickness direction for 3 minutes and then releasing it, the irreversible deformation amount, which is a ratio of changes in thicknesses before and after the operations, is 1.0% or less.

As a result, when the titanium porous body is incorporated into a device such as a PEM type water electrolysis device, it can maintain a certain thickness or shape and exert the required gas permeability or liquid permeability when a compressive force is applied. The irreversible deformation amount as described above is preferably 1.0% or less. The irreversible deformation amount may be, for example, 0.6% or less, or for example, 0.5% or less. Since a smaller irreversible deformation amount is preferable, the lower limit is not particularly limited and it may be set according to the purpose.

More specifically, the irreversible deformation amount Dc is a value calculated by measuring a thickness T1 of the titanium porous body before applying a pressure of 100 MPa and a thickness T2 of the titanium porous body after applying and releasing the pressure, according to the equation: Dc = (1 - T2/T1) x 100.

To measure the irreversible deformation amount Dc, a thickness T1 of a sample in which the plane view of the titanium porous body is square (projected area of 20mm x 20mm) is previously measured. The sample is then sandwiched between flat surfaces of two flat plates or the like in the thickness direction, and the flat surfaces are displaced in a direction that brings them closer to each other, thereby evenly applying a pressure of 100 MPa to the surface of the sample in the thickness direction for three minutes. The displacement rate can be constant at 0.1 mm/min. After applying the pressure, the pressure is released. This operation of applying and releasing the pressure is performed again, so that such an operation is performed twice in total. The thickness T2 of the sample removed from the space between the flat surfaces is then measured. Here, various compression test devices or other devices capable of applying a pressure to the sample in this way can be used. To measure the thicknesses T1 and T2 of the sample, the thickness for one position at the center of gravity of the sample in plane view is measured. This measurement is performed for five different samples and an average value thereof is adopted as the irreversible deformation amount Dc.

The titanium porous body having a relatively high air permeability P can be said to have good gas permeability or liquid permeability. However, the air permeability P of the titanium porous body can vary depending on its thickness. Therefore, the gas permeability or liquid permeability of the porous titanium body is evaluated herein by comparing the air permeability P of the porous titanium body with the index value I which depends on the thickness t (mm). The index value I is the value expressed by the equation: I = 1.6 x (1/t)^{1.3}.

Specifically, the titanium porous body according to this embodiment is such that an air permeability P satisfies the relationship P ≥ I between the air permeability P and the above index value I. Such a titanium porous body can exhibit good gas permeability or liquid permeability, especially in PEM type water electrolysis device.

The air permeability P (µm/Pa · S) is measured according to the Garley tester method, where the volume of air passing through the titanium porous body is 300 mL. Specifically, for example, a Gurley densometer compliant with ISO 5635-5 such as Toyo Seiki Gurley densometer (model number: G-B3C) is used to measure the time (s) required for the passage of air with a measurement hole diameter of Φ6 mm and an air volume of 300 mL, and an ISO air permeability (µm/Pa · S) obtained from that measurement is used as the air permeability P described above.

The ten-point average roughness Rz of at least one surface of the titanium porous body is preferably 9 µm or less, or even 5 µm or less, or 3 µm or less. The ten-point average roughness Rz of the surface is measured according to JIS B0601 (2001) using, for example, SJ-210 from Mitutoyo.

The titanium porous body is particularly suitable for use in the porous transport layer of the PEM type water electrolysis device. The PEM type water electrolysis device may have an anode and a cathode, an electrolyte membrane such as a perfluorocarbon sulfonate membrane with electrode catalyst layers such as platinum group metals on both sides, the electrolyte membrane being placed between the anode and cathode, and a porous transport layer placed between each electrode catalyst layer of the electrolyte membrane and the anode or cathode.

When water is fed to the anode and voltage is applied to the anode in the PEM type water electrolysis device, the water that moves through the porous transport layer on the anode side and reaches the electrode catalyst layer is decomposed to produce oxygen and protons (H⁺). The protons move from the anode to the cathode through the electrolyte membrane on the anode side, gain electrons in the electrode catalyst layer on the cathode side and generate hydrogen on the cathode side. Oxygen, on the other hand, moves through the porous transport layer to the discharge side channel and is discharged to the outside of the device.

In such a PEM type water electrolysis device, the space where the porous transport layer is placed, especially on the anode side, is subject to strong acidic and oxidizing conditions. However, if the titanium porous body has high corrosion resistance, it can be well used as a porous transport layer in such an extremely harsh environment. In the titanium porous body according to this embodiment, it may be possible to realize a surface with a large number of fine pores on at least one surface and a small ten-point average roughness Rz, and when the surface side thereof is pressed against the electrolyte membrane in the PEM type water electrolysis device, the generation of damage to the electrolyte membrane may be suppressed.

In addition to the PEM type water electrolysis system described above, the use of the titanium porous body is also being considered for organic electrolytic synthesis using a PEM type reactor. In such a device, electrolysis is also performed by passing protons through a proton exchange membrane. It is believed that the titanium porous body described herein has the potential to be used well for organic electrolytic synthesis using PEM type reactors and can be used as a porous transport layer (PTL) on the anode side of the electrolysis device that uses a proton exchange membrane.

### (Production Method)

The titanium porous body described above can be produced, for example, by performing the following steps in this order: a paste preparation step, a paste application step, a drying step, a debinding step, and a sintering step. However, if the paste has already been prepared and obtained, or if the paste has been applied in the form of the sheet, the paste preparation step and further the paste application step may be omitted.

First, in the paste preparation step, a paste containing titanium powder, an organic binder and an organic solvent is prepared.

Here, the titanium powder to be contained in the paste can have an average particle size D50 of 10 µm or more and 45 µm or less. Also, the titanium powder may have an average particle size D50 of 10 µm or more and 30 µm or less, or 10 µm or more and 20 µm or less. This allows the use of relatively low-cost titanium powder to reduce the increase in production costs and facilitate handling of titanium powder. The use of titanium powder with a smaller average particle size D50 tends to smooth the surface of the titanium porous body, which is in the form of the sheet. If the production conditions described herein are employed to produce the titanium porous body, it is possible to produce a titanium porous body having a small irreversible deformation amount while maintaining the required gas permeability or liquid permeability. The average particle size D50 means the particle size at which the cumulative distribution on a volume basis is 50% in the particle size distribution obtained by the laser diffraction scattering method.

Titanium powder with high purity is suitable, and pure titanium powder can be used. The titanium powder may have a titanium content of 99% by mass or more. The titanium powder can be ground powder, spherical powder such as atomized powder, or any other powder. As titanium powder, hydrogenated titanium powder, which is obtained by hydrogenation and pulverization of titanium raw materials such as sponge titanium, can also be used, and in this case, the hydrogen content of the hydrogenated titanium powder is preferably 5% or less by mass. When the titanium hydride powder is used, a dehydrogenation process may be performed between the debinding and sintering steps described below, in a vacuum or other reduced pressure atmosphere in a temperature range of 500°C or higher and 650°C or lower. The hydrogenated dehydrogenated titanium powder (so-called HDH powder) obtained by subjecting the above titanium hydride powder to dehydrogenation can also be used.

For example, as the organic binder used for the paste, various organic binders can be selected and used as needed, and they can be, for example, methyl cellulose-based, polyvinyl alcohol-based, ethyl cellulose-based, acrylic, polyvinyl butyral-based solvents, and the like. Organic binders that exhibit hydrophobicity are preferred. However, they are not limited to the above-listed substances. The organic solvent should be an alcohol (ethanol, isopropanol, turpineol, butylcarbitol, etc.). As an example, the organic binder can be polyvinyl butyral and the organic solvent can be isopropyl alcohol. The paste may further contain a plasticizer (glycerin, ethylene glycol, or the like) and a surfactant (alkylbenzene sulfonate, or the like).

The paste does not contain water as a solvent. The paste is also preferably be free of a foaming agent. This is to prevent agglomeration of titanium powder in the paste and generation of pinholes on the surface of the titanium porous body due to the difference in drying behavior between the organic solvent and water during drying, when the paste contains water. Also, when the paste does not contain a foaming agent, local large voids caused by foaming of the foaming agent will not be formed in the titanium porous body. As a result, the titanium porous body tends to have a smooth surface and is less prone to cracking during handling. Therefore, here, the foaming step that generates bubbles in the paste is not performed. It should be noted that the paste may be free of water as a solvent, and the inclusion of water that may unintentionally be mixed into the paste, such as moisture absorption, is acceptable.

The paste can be prepared by mixing the titanium powder, the organic binder, the organic solvent, and the like as described above, using, for example, a mixer with an agitator, a rotary mixer, a triple roll mill, and the like. At this time, the mixture may be pulverized using a vibration mill, a bead mill, or other pulverizing mixers.

In the paste application step, the above paste is relatively thinly applied onto a placing surface of a substrate or the like. The substrate can be provided with a release layer in advance. In this case, the paste is applied on the substrate through the release layer. If the substrate is provided with the release layer, it is easier to separate the formed body obtained by drying the paste after the drying step from the substrate.

As the substrate, resin substrates that are available in a somewhat lower cost are preferred. The resin substrate also has an advantage that it is flexible and is easily handled. Specific materials for the resin substrate include polyesters such as PET (polyethylene terephthalate) and PEN (polyethylene naphthalate), and polyvinyls such as polyethylene, polypropylene, polystyrene, and polyvinyl alcohol, among which PET is preferable in that it is inexpensive and can easily separate the formed body from the substrate after the drying step.

Providing the release layer on the substrate is optional, but when providing the release layer, a silicone coating or the like can be used as the release layer. For example, the release layer can be provided on the substrate by selecting a substrate in which a material such as CERAPEEL (registered trademark) from Toray is previously applied. The provision of the release layer on the substrate allows the resulting formed body in the form of the thin film obtained after the drying step to be easily separated from the substrate.

In the drying step, the paste is dried on the placing surface in, for example, an oven, a dryer or the like. This causes the organic solvent in the paste to evaporate, and provides a formed body in a form of a sheet on the substrate.

The heating temperature during drying can be 80°C or higher and 150°C or lower. The heating temperature during drying may be 100°C or higher and 140°C or lower. By drying the paste at the temperature in this range, the drying can be completed in a relatively short period of time while preventing boiling of the organic solvent and the like in the paste. The drying time is not limited and can be determined as needed, for example, 5 minutes or more and 300 minutes or less. The drying is preferably performed in an oxygen-containing atmosphere, e.g., air atmosphere. This makes it possible to suppress an increase in production cost.

At the end of the drying step, the formed body obtained after the paste has dried is separated such as by peeling it from the placing surface, and the front and back sides of the formed body are inverted before the debinding step is performed. In other words, the inverting of the formed body as used herein means turning the surface of the formed body that faced the lower side of the placing surface in the drying step toward the upper side in the debinding step, and turning the surface that faced the upper side in the drying step toward the placing surface on the lower side in the debinding step.

In the drying step, the organic binder may be biased toward the lower placing surface side where the organic solvent in the paste is less likely to be volatilized. However, by inverting the front and back surfaces of the formed body, the organic binder is located on the upper side and well volatilized in the debinding step. This can suppress the generation of defective products after the sintering step described below, in which the formed body is heated at a relatively high temperature.

The same substrate can be used for the drying step and the debinding step as the member on which the paste or formed body is placed, but different substrates may also be used. Thus, the placing surface in the drying step and the placing surface in the debinding step do not necessarily coincide with each other.

Next, in the debinding step, the formed body is heated in a furnace to volatilize and remove the organic substances such as the organic binder in the formed body. In this case, the organic binder located on the upper side of the formed body can be well volatilized by inverting the front and back surfaces of the formed body as described above, and the residue of the organic binder is suppressed after the debinding step.

In the debinding step, the formed body is preferably heated at a temperature of 320°C or higher and 450°C or lower, or at a temperature of 360°C or higher and 400°C or lower. This allows the organic binder to be removed while suppressing sintering of the titanium powder due to heating. In this way, the proper position of each titanium powder in the formed body can be maintained. The heating time is not limited, but it may be 3 hours or more and 12 hours or less. An atmosphere containing oxygen, such as an air atmosphere, is suitable for the heating step. When the atmosphere containing oxygen is used, it is presumed that an oxide film grows well on the surface of the titanium powder, in addition to suppressing the increase in cost.

The formed body that has been subjected to the debinding step is then subjected to a sintering step to sinter the titanium powder in the formed body. In the sintering step, the formed body is heated at a temperature of 750°C to 1000°C, preferably 775°C to 950°C. In the sintering step, it may be heated for a period of time of 1 hour or more and 4 hours or less. The atmosphere during sintering may be, for example, a vacuum or reduced pressure atmosphere of 1.0 x 10⁻² Pa or less, or an inert atmosphere of an Ar gas or a He gas.

By performing the debinding step in the atmosphere containing oxygen and then performing the sintering step in the reduced pressure atmosphere or inert gas atmosphere, the oxygen in the oxide film grown on the surface of the titanium powder in the debinding step is incorporated into the titanium powder in the sintering step, and the sintered titanium porous body is strengthened, resulting in a titanium body with improved compression resistance. If the sintering step is also performed in the oxygen-containing atmosphere, the oxygen in the atmosphere may be incorporated into the titanium powder during the sintering step, resulting in excessive oxygen content.

After the sintering step, the titanium porous body is obtained. As described above, the titanium porous body has high compression resistance and can exhibit the required gas permeability or liquid permeability. Here, the titanium porous body is produced that has a thickness of 0.50 mm or less and a projected area of the surface onto a plane of 28,000 mm² or more. To achieve these dimensions, the paste application area and thickness can be adjusted during the paste application step.

### [Examples]

Next, the titanium porous body according to the present invention was experimentally produced, and its effects were confirmed as described below. However, descriptions herein are merely for illustration, and are not intended to be limited thereto.

Titanium powder (HDH powder) with an average particle size of D50 shown in Table 1 and a titanium content of 99% by mass or more was mixed with polyvinyl butyral as an organic binder and isopropyl alcohol as an organic solvent to prepare a paste. The paste thus prepared does not contain water and a foaming agent.

The above paste was applied in the form of the sheet on a surface of a PET resin substrate, dried to form a formed body, which was then subjected to debinding and sintering steps in this order to produce a titanium porous body with a rectangular shape in plane view (at an aspect ratio in the range of 1:1 to 1:3). The drying was performed by heating the paste in an air atmosphere at 120°C. The debinding was performed by heating the formed body in an air atmosphere at 380°C. The sintering was performed in a vacuum atmosphere (1 × 10⁻² Pa or lower), and the heating temperatures are shown in Table 1.

In Examples 1 to 7, after drying, each formed body was peeled from the resin substrate and placed on a placing surface of a graphite setter in a direction of the front and back surface inverted before debinding. In Comparative Examples 1 to 3, each formed body was peeled from the resin substrate after drying, but it was subjected to debinding by placing it on the placing surface of the graphite setter in the same orientation as that during drying, without inverting the front and back surfaces.

As a result, after sintering, a titanium porous body with a good flat surface was obtained in each of Examples 1 to 7 and Comparative Example 2, whereas in Comparative Examples 1 and 3, wrinkles with a shape raised from a surface were formed on the surface of the titanium porous body, resulting in a defective product. It was found that in order to produce titanium porous bodies with a large projected area of the surface onto a plane as in Examples 1 to 7, the front and back surfaces are inverted after drying and before debinding to reduce the number of defective products. The projected area and thickness shown in Table 1 were measured according to the previously described method, respectively.

The irreversible deformation amount, air permeability P, and index value I were measured or calculated for each of the titanium porous bodies according to Examples 1 to 7 by the method described above. Table 1 shows the results. Each of the titanium porous bodies according to Examples 1 to 7 had a titanium content of 97% by mass or more and an oxygen content of 0.9% by mass or more and 2.0% by mass or less.

As shown in Table 1, each of the titanium porous bodies according to Examples 1 to 7 had improved compression resistance because the irreversible deformation amount was sufficiently small, and also had the required gas permeability or liquid permeability with P ≥ I. This would be due to the good volatilization of the organic binder during the debinding step and the high heating temperature during sintering. In particular, in Examples 2 and 3 where the heating temperature during sintering was further increased, and in Examples 6 and 7 where titanium powder with a smaller average particle size D50 was used, the irreversible deformation amount of the titanium porous body was smaller, and in some cases, as in Examples 6 to 7, it was substantially zero. Results of Examples 6 to 7 were less than the lower limit of the measurement device, they were determined to be "less than 0.4%". Comparative Example 2 was a titanium porous body with a smaller projected area of the surface.

**[Table 1]**

| | Production Conditions | | | Titanium Porous Bodies | | | | | | | |
|---|---|---|---|---|---|---|---|---|---|---|---|
| | D50 (µm) | Front and Back Inverted | Sintering Temperature (°C) | Projected Area (mm²) | Thickness (mm) | Rz (µm) | Wrinkles | Irreversible Deformation Amount (%) | Air Permeability P (µm/Pa · S) | Index Value I | Relationship between P and I |
| Ex. 1 | 28 | Yes | 775 | 100000 | 0.08 | 8.2 | Absent | 0.9 | 469 | 42 | P ≥ I |
| Ex. 2 | 28 | Yes | 850 | 100000 | 0.08 | 8.0 | Absent | 0.5 | 432 | 42 | P ≥ I |
| Ex. 3 | 28 | Yes | 950 | 100000 | 0.08 | 8.6 | Absent | 0.4 | 397 | 42 | P ≥ I |
| Ex. 4 | 28 | Yes | 775 | 100000 | 0.15 | 8.3 | Absent | 0.9 | 175 | 18 | P ≥ I |
| Ex. 5 | 28 | Yes | 775 | 100000 | 0.25 | 8.1 | Absent | 0.9 | 94 | 9 | P ≥ I |
| Ex. 6 | 12 | Yes | 775 | 100000 | 0.04 | 4.1 | Absent | < 0.4 | 119 | 105 | P ≥ I |
| Ex. 7 | 12 | Yes | 775 | 100000 | 0.10 | 2.3 | Absent | < 0.4 | 42 | 31 | P ≥ I |
| Comp. 1 | 28 | No | 775 | 100000 | 0.04 | - | Present | - | - | - | - |
| Comp. 2 | 28 | No | 775 | 7500 | 0.04 | - | Absent | - | - | - | - |
| Comp. 3 | 12 | No | 775 | 100000 | 0.08 | - | Present | - | - | - | - |

In view of the foregoing, according to this invention, it is suggested that the invention can produce a titanium porous body with a larger surface area, improved compression resistance, and the required gas or liquid permeability with a higher yield.

## Claims

1. A titanium porous body in a form of a sheet, wherein
a thickness t is 0.50 mm or less and a projected area of a surface onto a plane is 28,000 mm² or more,
an irreversible deformation amount after being pressurized at 100 MPa is 1.0% or less, and
an air permeability P (µm/Pa·S) satisfies a relationship P ≥ I between the air permeability P and an index value I, and the index value I is represented by I = 1.6 × (1/t)^{1.3}.

2. The titanium porous body according to claim 1, wherein the titanium porous body has a titanium content of 97% by mass or more and an oxygen content of 0.9% by mass or more and 2.0% by mass or less.

3. The titanium porous body according to claim 1 or 2, wherein the projected area of the surface is 600,000 mm² or less.

4. The titanium porous body according to claim 1 or 2, wherein the thickness t is 0.04 mm or more.

5. The titanium porous body according to claim 1 or 2, wherein the titanium porous body has a ten-point average roughness Rz of at least one surface of 9 µm or less.

6. A method for producing a titanium porous body in a form of a sheet, the method comprising:
a drying step of drying a paste containing titanium powder, an organic binder and an organic solvent but not containing water or a foaming agent on a placing surface to obtain a formed body in a form of a sheet;
a debinding step of heating the formed body on the placing surface in a direction where front and back surfaces of the formed body is inverted relative to a direction on the placing surface in the drying step to volatilize the organic binder in the formed body; and
a sintering step of heating the formed body after the debinding step to sinter the titanium powder in the formed body,
wherein the titanium porous body has a thickness of 0.50 mm or less and a projected area of a surface on a plane of 28,000 mm² or more.

7. The method for producing a titanium porous body according to claim 6, wherein the method uses as the titanium powder a pulverized powder having an average particle size D50 of 10 µm or more and 45 µm or less.

8. The method for producing a titanium porous body according to claim 6 or 7, wherein the method uses as the titanium powder a titanium powder having an average particle size D50 of 10 µm or more and 20 µm or less.

9. The method for producing a titanium porous body according to claim 6 or 7, wherein, in the drying step, the paste is heated in an atmosphere containing oxygen at a temperature of 80°C or higher and 150°C or lower.

10. The method for producing a titanium porous body according to claim 6 or 7, wherein, in the debinding step, the formed body is heated in an atmosphere containing oxygen at a temperature of 320°C or higher and 450°C or lower.

11. The method for producing a titanium porous body according to claim 6 or 7, wherein, in the sintering step, the formed body is heated in a reduced pressure or an inert gas atmosphere.

12. The method for producing a titanium porous body according to claim 6 or 7, wherein, in the sintering step, the formed body is heated at a temperature of 750°C to 1000°C.

13. The method for producing a titanium porous body according to claim 12, wherein, in the sintering step, the formed body is heated at a temperature of 775°C to 950°C.
